# EUROPÄISCHE PATENTSCHRIFT

(11) **EP 2 919 587 B1**
(45) Veröffentlichungstag und Bekanntmachung des Hinweises auf die Patenterteilung: **06.01.2021**
(21) Anmeldenummer: 13786497.1
(22) Anmeldetag: 06.11.2013
(51) Int. Cl.: A21B 3/04, A47J 27/04, F24C 15/32, A21B 1/36

(54) **BACKOFEN MIT EINEM DAMPFERZEUGER**
BAKING OVEN WITH STEAM GENERATOR
FOUR DE CUISSON AVEC GÉNÉRATEUR DE VAPEUR

(30) Priorität: 14.11.2012 DE 102012220812; 24.07.2013 DE 202013103331 U
(43) Veröffentlichungstag der Anmeldung: 23.09.2015
(73) Patentinhaber: MIWE Michael Wenz GmbH, 97450 Arnstein (DE)
(72) Erfinder: KOOS, Michael, 97450 Arnstein (DE); PFEUFFER, Bernd, 97776 Obersfeld (DE)
(74) Vertreter: Freischem, Stephan
(86) Internationale Anmeldenummer: PCT/EP2013/073184
(87) Internationale Veröffentlichungsnummer: WO 2014/075975

(56) Entgegenhaltungen:
- EP-A1- 2 227 961
- EP-A2- 0 954 971
- WO-A1-01/59370
- WO-A1-92/16243
- DE-A1-102006 027 990
- DE-A1-102006 062 069
- FR-A1- 2 603 976
- GB-A- 438 027
- GB-A- 2 146 222
- JP-A- 2008 298 408

## Beschreibung

Die Erfindung betrifft einen Backofen mit einem Dampferzeuger, der einen Backschwaden in dem Backofen erzeugt, gemäß Anspruch 1. Der Dampferzeuger weist mindestens ein Wärmeübertragungselement auf, sowie mindestens eine Wasserleitung, welche Wasser zu dem Wärmeübertragungselement führt. Die Erfindung betrifft ferner ein Verfahren zum Erzeugen eines Backschwadens gemäß dem Anspruch 11 und eine Verwendung des Dampferzeugers zum Entfernen eines Backschwadens aus einem Backraum des Backofens gemäß Anspruch 12.

Derartige Dampferzeuger werden bei Backöfen dazu verwendet, einen Dampfschwaden zu erzeugen, der in den Backraum geleitet wird und das Backergebnis vorteilhaft beeinflusst. Es sind mehrere Bauarten derartiger Dampferzeuger bekannt. Bei einer ersten Bauart befinden sich mehrere Wärmeübertragungselemente unmittelbar in dem Backraum oder in einer an den Backraum angrenzenden Kammer, welche von der Backatmosphäre durchströmt wird. Die Wärmeübertragungselemente sind in diesem Fall häufig Schwadeneisen, d.h. längliche, stabförmige Metallelemente, von denen mehrere übereinander angeordnet sind. Das Wasser wird entweder auf die einzelnen Schwadeneisen aufgebracht oder fließt kaskadenartig von oben nach unten über die Schwadeneisen. Dabei nimmt es die Wärme der Schwadeneisen auf und verdampft. Die Wärmeübertragungselemente selbst werden entweder durch die Backatmosphäre oder durch andere heiße Medien wie zum Beispiel das Abgas des Brenners des Backofens beheizt.

Ein derartiger Backofen mit Schwadeneisen ist beispielsweise aus der Druckschrift DE 10 2008 035 394 B3 bekannt. Hier wird der Schwadenapparat durch einen Abgaskanal für das Brennerabgas beheizt und befindet sich an der Rückwand des Backraums.

Ferner sind Schwadenapparate bekannt, die in externen, vom Backraum getrennten Kammern angeordnet sind. Diese Kammern sind mit Metall fast vollständig befüllt und weisen separate Heizelemente, beispielsweise von Thermoöl durchströmte Wendel auf, welche die Wärmeübertragungselemente aufheizen und auch selbst zur Wärmeübertragung auf das Wasser dienen. Derartige Dampferzeuger für Backöfen sind beispielsweise aus der Druckschrift DE 10 2005 058 592 A1 und aus der Druckschrift DE 10 2008 041 412 A1 bekannt.

Andere Dampferzeuger nutzen den Vorteil der feineren Vernebelung einer auf einen rotierenden Körper aufgebrachten Wassermenge. Dieses Prinzip ist beispielsweise in der Druckschrift EP 0 244 538 A2 beschrieben, in der sich der rotierende Körper innerhalb des Ventilators befindet. Es sind andere Ausführungsformen bekannt, bei denen das Wasser direkt auf den Ventilator des Ofens aufgebracht wird. Durch die Drehbewegung wird das Wasser in feinen Tröpfchen von dem rotierenden Körper fort geschleudert. Bei diesem Vorgang wälzt der drehende Ventilator die Luft um so dass der intensive Kontakt des Dampfschwadens mit der Backwarenoberfläche durch die Luftbewegung gestört wird, wodurch das Backergebnis negativ beeinflusst wird.

Die Druckschrift DE 10 2006 062 069 A1 betrifft einen Dampferzeuger mit einem Durchlauferhitzer. Das Wasser durchläuft den Durchlauferhitzer und wird dabei erhitzt. Eine Förderpumpe bewegt das Wasser aus einem Reservoir durch den Durchlauferhitzer bis in den Garraum. Aus dem Ende einer Wasserleitung tritt aus einer Düse 48 hauptsächlich ein Dampfstrahl aus. Aus der Düse austretende Wassertröpfchen schlagen sich auf einer Prallwand 44 nieder und werden über eine Rücklaufleitung 50, die zwischen dem Tank und der Förderpumpe mündet, zurückgeführt.

Die Druckschrift WO 01/59370 A1 beschreibt einen Dampferzeuger bei dem unter Druck stehendes Wasser in einem Wärmetauscher auf bis zu 200 °C erhitzt wird und im Wesentlichen als Dampf aus einer Düse in eine Backatmosphäre eintritt. Eine Zusatzheizung kann der Backatmosphäre zusätzliche Wärme zuführen.

Bei der Druckschrift GB 2 146 222 wird die Atomisierung von Wasser zur Dampferzeugung vorgeschlagen. Hierzu wird eine Ultraschall-Vernebelung verwendet, die aus Luftbefeuchtern bekannt ist. Komprimierte Luft wird der Austrittsdüse in Form einer stehenden Ultraschall-Welle zugeführt, welche das zugeführte Wasser vernebelt. Der Nebel wird dann unmittelbar in den Backraum geleitet. Die Druckschrift GB 438 027 A aus dem Jahr 1935 offenbart ebenfalls eine Vernebelungsvorrichtung mittels Druckluft.

Die EP 2 227 961 A1 beschreibt ein Verfahren zum Entschwaden von Tunnelöfen. Die Dampf- oder Schwadenbildung wird hier nicht im Detail beschrieben. Auch die Druckschrift EP 0 954 971 A2 beschreibt ein Entschwadungsverfahren ohne den Vorgang des Beschwadens im Detail zu erläutern.

Die Druckschrift JP2008 298 408 A beschreibt einen Dampfgarer mit einer Gas/Flüssigkeitsmischvorrichtung, in der durch einen Ultraschallvernebler oder eine Düse vernebeltes Wasser einem kontinuierlich zirkulierenden Dampfstrom beigemischt und in einem Dampferhitzer überhitzt wird. Ferner sind Dampferzeuger außerhalb der Lebensmitteltechnik bekannt (z.B. WO 92/16243 A1).

Aufgabe der vorliegenden Erfindung ist es, das gezielte Einbringen und Entfernen eines Backschwadens in bzw. aus einem Backraum, zu optimieren.

Diese Aufgabe wird in Bezug auf einen Backofen durch die Merkmale des Anspruchs 1 gelöst. Die auf den Anspruch 1 zurückbezogenen Unteransprüche enthalten vorteilhafte Ausführungsformen der Erfindung.

Es wird ein Dampferzeuger für einen Backofen mit mindestens einem Wärmeübertragungselement und mit mindestens einer Wasserleitung vorgeschlagen, welche Wasser zu dem Wärmeübertragungselement führt, wobei mindestens eine Druckluftleitung dem Wasser Druckluft zusetzt und den Druck des Wassers erhöht, so dass das Wasser in Form eines Sprühnebels aus der Öffnung austritt und in Form feinster Tröpfchen auf die Oberfläche des Wärmeübertragungselements trifft.

Das Wasser tritt im Bereich des Dampferzeugers durch Sprühdüsen aus. Durch die Zufuhr von Druckluft und die Druckerhöhung des Wassers wird dessen Ausströmgeschwindigkeit aus den Sprühdüsen erhöht und dadurch die Vernebelung des Wassers verbessert.

Die Druckluft in der Druckluftleitung weist einen Druck auf, der vorzugsweise erheblich über dem Druck des Wassers in der Wasserleitung liegt. Beispielsweise kann ein Druck der Luft in der Druckluftleitung von etwa 1 bar über dem Umgebungsdruck gewählt werden. Der Druck der Luft kann aber variieren und auch nach Bedarf mit einem Magnetventil einstellbar sein. Wasser fließt mit einem geringeren Überdruck aus den Wasseraustrittsöffnungen der Wasserleitung. Die Druckluft wird dem Wasser vor dem Ausströmen oder bei dem Ausströmen aus Ausströmöffnungen der Wasserleitung zugesetzt. Das aus den Öffnungen der Wasserleitung ausströmende Wasser strömt folglich mit einer sehr viel höheren Geschwindigkeit aus den Öffnungen aus. Die Druckluft führt dazu, dass das aus den Öffnungen der Wasserleitung ausströmende Wasser in Form eines Sprühnebels aus den Öffnungen austritt. Das Wasser trifft folglich in Form feinster Tröpfchen auf die Oberfläche des Wärmeübertragungselements. Zum Verdampfen der feinsten Tröpfchen ist nur wenig Wärmeenergie erforderlich. Folglich kühlen die Wärmeübertragungselemente beim Besprühen mit den fein verteilten Wassertröpfchen weniger aus als beim Aufbringen eines herkömmlichen Wasserstrahls.

Durch die Maßnahme, das Wasser mit Druckluft fein zu vernebeln, lässt sich mit einer geringeren Wassermenge und unter geringerer Auskühlung der Wärmeübertragungselemente in kurzer Zeit ein sehr guter Backschwaden erzeugen, so dass bei gleichem Backergebnis weniger Heizenergie für die Dampferzeugung aufgewendet werden muss und sogar die Backzeit reduziert werden kann.

In der Praxis kann die Druckluftleitung in die Wasserleitung münden. Meist weist die Wasserleitung mehrere Öffnungen auf und das unter Druck gesetzte Wasser tritt an all diesen Öffnungen gemeinsam mit der Druckluft in Form eines Sprühnebels oder Sprays fein verteilter Wassertröpfchen aus. Der hohe Luftdruck kann in der Wasserleitung eine hohe Strömungsgeschwindigkeit erzeugen, so dass die gesamte Strömung einen hohen dynamischen und relativ niedrigen statischen Druck aufweist. Auf diese Weise wird ähnlich dem Prinzip einer Venturidüse das Wasser aufgrund des geringen statischen Drucks in die Wasserleitung gefördert und durch den Luftstrom mitgerissen, so dass es als feiner Nebel aus den Öffnungen der Wasserleitung austritt. Es sind auch beliebige andere Zusammenführungen von Wasser und Druckluft möglich. So kann beispielsweise die Druckluft vom Wasser getrennt zu den Öffnungen in der Wasserleitung geleitet werden und dort aufgrund des Venturi-Effekts Wasser mitreißen.

Insbesondere bei einem Schwadenapparat mit mehreren Schwadeneisen können in der Wasserleitung mehrere in Abständen zueinander angeordnete Sprühöffnungen angeordnet sein. Dabei kann jeweils zwischen zwei Schwadeneisen eine Sprühöffnung vorgesehen sein.

Bei Dampferzeugern, die in einer separaten Kammer angeordnet sind und deren Dampf über Dampfkanäle in den Backraum geleitet wird, kann die Wasserleitung mit nur einer oder wenigen Sprühöffnungen versehen sein, die beispielsweise am Ende der Wasserleitung angeordnet sind.

Die Wasserleitung kann in der Praxis an ein Versorgungsnetz angeschlossen sein, und in der Wasserleitung kann zwischen der Mündung der Druckluftleitung und dem Anschluss an das Versorgungsnetz ein Rückschlagventil angeordnet sein. Hierdurch wird vermieden, dass durch den erhöhten Druck der Druckluft das Wasser in das Versorgungsnetz zurück gedrückt wird. Die gesamte Druckluft entweicht mit dem Wasser durch die Sprühöffnungen der Wasserleitungen und befördert Wassertröpfchen zu den Wärmeübertragungselementen. Die Einleitung der Druckluft kann auch in Intervallen erfolgen, wenn der Rückstau der Druckluft in der Wasserleitung eine Wasserzufuhr blockiert. Durch ein temporäres Abschalten der Druckluftzufuhr wird der Gesamtdruck in der Wasserleitung reduziert und Wasser kann nachströmen.

In einer Ausführungsform kann die Wasserleitung im Wesentlichen waagerecht und oberhalb der Wärmeübertragungselemente angeordnet sein. Diese Ausbildung wird vorzugsweise für separate Dampferzeuger gewählt, die in von dem Backraum getrennten Kammern angeordnet sind.

Alternativ kann die Wasserleitung im Wesentlichen senkrecht und seitlich der Wärmeübertragungselemente verlaufen. Diese Anordnung wird bevorzugt bei Schwadenapparaten mit Schwadeneisen im Backraum oder einem an den Backraum angrenzenden Raum gewählt.

Die Druckluftleitung ist mit einer Druckluftquelle zu verbinden. Befindet sich in der Bäckerei, in der der Backofen und der damit verbundene Dampferzeuger betrieben wird, ein Druckluft-Versorgungsnetz, welches durch einen Kompressor gespeist wird, kann dieses Druckluft-Versorgungsnetz als Druckluftquelle verwendet werden. Wenn dies nicht der Fall ist, kann die Druckluftleitung mit einer Druckluftflasche verbunden werden, der die Druckluft entnommen wird. Alternativ kann ein Kompressor, gegebenenfalls mit einem Druckluftspeicher, in dem Backofen oder in seiner unmittelbaren Umgebung angeordnet werden, der an die Druckluftleitung angeschlossen wird, um Druckluft einzuspeisen.

Die Wärmeübertragungselemente können beheizbare Elemente sein. Bei der Verwendung des Dampferzeugers mit einem Backofen ist für den Backofen bereits eine Heizung vorgesehen. In diesem Fall können die Wärmeübertragungselemente einfache Metallkörper zur Speicherung von Wärme sein, die durch die Backofenheizung aufgeheizt werden. Insbesondere können die Wärmeübertragungselemente aufheizbare Metallkörper sein, wie zum Beispiel Metallstangen, beweglich miteinander verbundene Metallelemente, insbesondere Glieder einer Eisenkette oder Schwadeneisen.

Der oben beschriebene Dampferzeuger kann in der Praxis ein integrierter Bestandteil eines Backofens sein. Hierzu kann er direkt in den Backraum integriert sein oder in einer separaten Kammer des Backofens angeordnet sein, welche über Dampfkanäle mit dem Backraum in Verbindung stehen. Insbesondere können die Wärmeübertragungselemente und somit auch die Wasserleitungen entweder in dem Backraum oder in einer an den Backraum angrenzenden Kammer oder in einer entfernten Kammer in dem oder an dem Backofen angeordnet sein, die über Dampfkanäle mit dem Backraum verbunden sind.

Der oben beschriebene Dampferzeuger wird bevorzugt bei einem Verfahren zum Erzeugen eines Backschwadens eingesetzt, bei dem mindestens einem Wärmeübertragungselement über mindestens eine Wasserleitung Wasser zugeführt wird und der entstehende Wasserdampf in einen Backraum geleitet wird, wobei dem Wasserdruck Luft zugesetzt wird.

Die oben beschriebene Druckluftleitung kann aber auch zum Entschwaden eines Backofens verwendet werden. Bei einem derartigen Verfahren zum Entfernen eines Backschwadens wird bei dem mit dem Backraum verbundenen Dampferzeuger mit mindestens einer Wasserleitung und mindestens einer Druckluftleitung die Wasserzufuhr zur Wasserleitung gesperrt und die Druckluftzufuhr zur Druckluftleitung geöffnet. Durch die Druckluft entsteht in dem Backraum ein Überdruck, der die Backatmosphäre aus dem Backraum austreibt. Hierbei wird die in dem Backraum befindliche Feuchtigkeit schnell aus dem Backofen entfernt. Diese schnelle Entschwadung macht herkömmliche Entschwadungstechniken, wie beispielsweise das Öffnen von Frischluftklappen, unnötig. Der Schwaden strömt aus dem Backraum über die normalen Überdruckkanäle aus. Durch diese Entschwadungsverfahren kann sogar die Konstruktion des Ofens durch Einsparen der Frischluftklappe vereinfacht werden.

Ausführungsbeispiele werden nachfolgend unter Bezugnahme auf die beigefügten Zeichnungen beschrieben.
Fig.1 zeigt eine Vorderansicht eines Backofens mit Schwadenapparat.
Fig. 2 zeigt eine geschnittene Darstellung des Backofens aus Figur 1 mit Blick auf die Rückwand.
Fig. 3 zeigt den Schwadenapparat des Backofens aus den Figuren 1 und 2.
Fig. 4 zeigt eine Schnittansicht des Schwadenapparates aus Figur 3 gemäß Schnittlinie A-A.
Fig. 5 zeigt die vergrößerte Einzelheit X aus Figur 4.
Fig. 6 zeigt ein Sprühprofil der Wasserleitung des Schwadenapparates aus den Figuren 3 bis 5.
Fig. 7 zeigt eine alternative Ausführungsform eines Schwadenapparates in Seitenansicht.
Fig. 8 zeigt den Schwadenapparat aus Figur 7 in entlang Schnittlinie A-A geschnittener Darstellung.
Fig. 9 zeigt eine vergrößerte Darstellung der Einzelheit X des Schwadenapparates aus Figur 7.

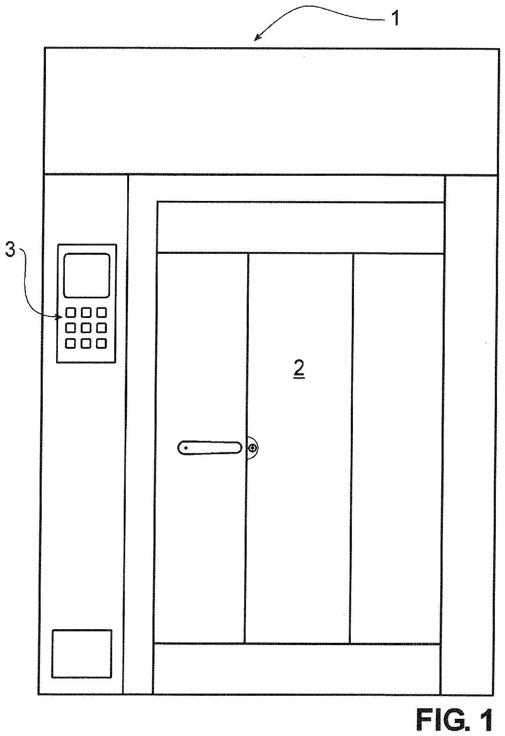

Die Fig. 1 zeigt einen Backofen, der üblicherweise in Bäckereien oder in Backwarenfabriken verwendet wird. Der Backofen umfasst ein Gehäuse 1 mit einer Tür 2, die während des Backvorgangs verschlossen ist und zum Einbringen und Entnehmen der Backwaren geöffnet werden kann. Die Tür 2 ist etwa zwei Meter hoch und reicht ohne Türschwelle bis zum Boden. So ist sichergestellt, dass durch die Türöffnung bei geöffneter Tür 2 ein Backwagen, auch Stikkenwagen genannt, in den Backraum des Backofens eingeschoben werden kann. In Fig. 1 ist ferner ein Bedienfeld 3 mit einem Anzeigebildschirm zu erkennen. Über das Bedienfeld 3 können Parameter des Backvorgangs (z.B. Dauer, Temperatur, Beschwadung) eingegeben werden, welche anschließend zur Kontrolle über den Anzeigebildschirm des Bedienfelds 3 angezeigt werden.

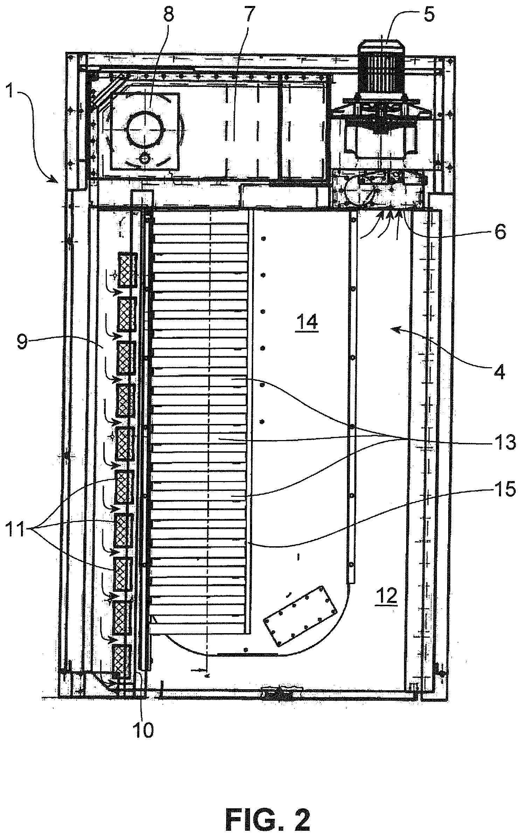

Die Fig. 2 zeigt eine Schnittdarstellung des Backofens aus Fig. 1, bei der die Vorderseite mit der Tür weggeschnitten ist. Es sind der Querschnitt des Backraums 4, auch Backkammer genannt, sowie die wesentlichen für den Backbetrieb erforderlichen funktionalen Elemente zu erkennen. Oben rechts ist in dem Gehäuse 1 des Backofens ist ein Gebläse 5 zu erkennen. Dieses Gebläse 5 saugt ein Heizmedium, welches üblicherweise aus erhitzter Luft besteht, aus dem Backraum 4 durch dessen Deckwand 6 hindurch ab. Im Bereich der Deckwand 6 kann eine Drossel oder ein Schieber vorgesehen sein, um den Strömungsquerschnitt für das abgesaugte Heizmedium zu variieren und so die den Backwaren im Backraum 4 zugefügte Wärmemenge zu beeinflussen.

Von dem Gebläse 5 strömt das Heizmedium durch ein Heizregister 7, das durch einen Brenner 8 erhitzt wird. Der Brenner 8 wird üblicherweise mit Öl oder Gas betrieben. Die so erhitzte Luft strömt anschließend in einen Zufuhrkanal 9, der sich in dem in Fig. 2 links gezeigten Abschnitt des Ofengehäuses 1 befindet. Der Zufuhrkanal 9 erstreckt sich über die gesamte Höhe des Backraums 4 und grenzt an dessen linke Seitenwand 10 an. Direkt neben der linken Seitenwand 10 sind in dem Zufuhrkanal 9 längliche Schamottsteine 11 angeordnet. Diese werden durch das erhitzte Heizmedium auf dessen Temperatur erhitzt. Wenn beispielsweise durch Öffnen der Ofentür und Einbringen neuer Backwaren das Heizmedium abgekühlt wird, sorgt die Wärmespeicherkapazität der Schamottsteine 11 dafür, dass das Heizmedium nach erneutem Schließen der Ofentür schnell wieder die vorgesehene Temperatur erreicht. Die Schamottsteine 11 bilden folglich Wärmespeicherelemente zur Erhitzung des Heizmediums.

Die Schamottsteine 11 sind mit einem Abstand zueinander über die Höhe der linken Seitenwand 10 des Backraums 4 verteilt. Die Spalte zwischen den Schamottsteinen 11 definieren den Strömungsweg des Heizmediums. Die linke Seitenwand 10 des Backraums 4 besteht aus einem Blech mit Durchbrüchen, welche das Eintreten des Heizmediums in den Backraum 4 ermöglichen.

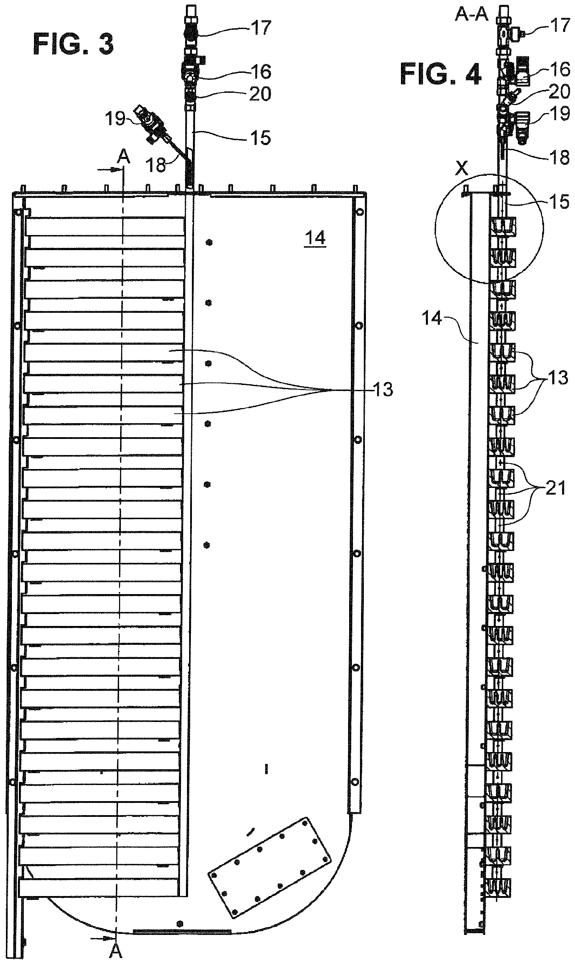

An der in Fig. 2 zu erkennenden Rückwand 12 des Backraums 4 sind Wärmeübertragungselemente 13 angeordnet. Die Wärmeübertragungselemente 13 werden von länglichen und nach oben offenen Schwadeneisen gebildet, die in Verbindung mit den Fig. 3 bis 5 näher erläutert sind. Eine Wasserleitung 15, welche sich am rechten Ende der Schwadeneisen 13 in senkrechter Richtung erstreckt, ermöglicht die Zufuhr von Wasser zu den Schwadeneisen 13. Die Wasserleitung 15 wird von einem Verteilerrohr aus Metall gebildet. Durch Aufsprühen von Wasser auf die Schwadeneisen 13 wird ein Dampfschwaden in dem Backraum 4 erzeugt, der das Backergebnis positiv beeinflusst.

Die Schwadeneisen 13 befinden sich an der Rückwand des Backraums 4 und somit außerhalb des Strömungswegs des Heizmediums, welches von der linken Seitenwand 10 des Backraums 4 zur oberen rechten Seite der Deckwand 6 des Backraums strömt. Folglich können Ablagerungen oder sonstige Veränderungen an den Schwadeneisen 13 die Strömung des Heizmediums durch den Backraum 4 nicht beeinflussen.

Damit die Schwadeneisen 13 an der Rückwand 12 des Backraums 4 die erforderliche Temperatur erhalten, sind sie an einem Rauchgaskanal 14 im Bereich der Rückwand 12 des Backraums 4 befestigt. Anders als beispielsweise bei den aus der DE 10 2008 035 394 B3 bekannten Schwadenapparaten erstrecken sich die Schwadeneisen 13 des vorliegenden Schwadenapparats nur über die Hälfte der Breite des Abgaskanals, weil wegen des verbesserten Aufsprühens weniger Wärmespeichermasse und Kontaktfläche der Schwadeneisen 13 erforderlich ist, um die erforderliche Dampfmenge zu erzeugen.

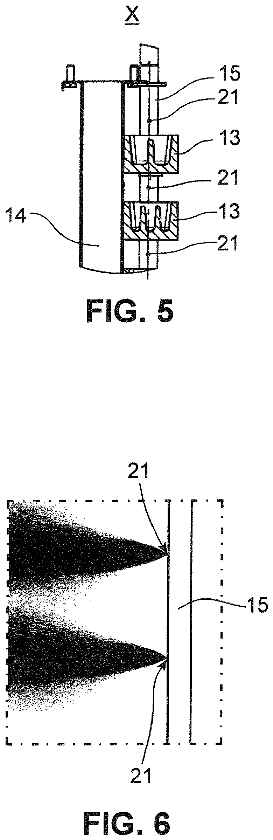

Die Fig. 3 zeigt eine isolierte Darstellung des Schwadenapparats an dem Abgaskanal 14 zu dessen Beheizung. Die Fig. 4 zeigt den Schwadenapparat aus Fig. 3 in einer entlang der Schnittlinie A-A geschnittenen Darstellung. Die Fig. 5 zeigt eine vergrößerte Ansicht zweier Schwadeneisen aus Fig. 4.

Es ist zu erkennen, dass die Schwadeneisen 13 in einem Abstand zueinander über die Höhe des Abgaskanals 14 in dessen linker Hälfte angeordnet sind. Die Wasserleitung 15 an der rechten Seite der Schwadeneisen 13 besteht aus einem metallischen Verteilerrohr. Das Verteilerrohr 15 ist über ein Magnetventil 16 an eine Wasserversorgungsquelle, beispielsweise ein Wasserversorgungsnetz, angeschlossen. Das Magnetventil 16 erlaubt die gesteuerte Zufuhr von Wasser sowie das Absperren von Wasser, wenn kein Dampfschwaden erzeugt werden soll. Im Bereich des Magnetventils 16 ist ein Wasserzähler 17 angeordnet, der seine Messwerte an die Steuerung für den Schwadenapparat des Backofens übermittelt, so dass dieser Steuerung die Menge des zugeführten Wassers ermitteln kann. Auf diese Weise ist es möglich, in jedem Backzyklus präzise die Wassermenge zuzuführen, die für die Erzeugung des erforderlichen Dampfschwadens notwendig ist.

Die Wasserversorgungsquelle kann aber auch drucklos sein und beispielsweise aus einem einfachen Wassertank bestehen, der etwas oberhalb der Wasserleitung angeordnet ist, so dass das Wasser aufgrund des Atmosphärendrucks zur Wasserleitung strömt. Die mit hoher Geschwindigkeit durch die Wasserleitung und/oder aus den Öffnungen der Wasserleitung strömende Druckluft reißt das Wasser mit und sorgt für dessen feine Verteilung, auch wenn kein erheblicher Wasserdruck vorhanden ist.

Oberhalb der Schwadeneisen 13 mündet ferner eine Druckluftleitung 18 in das Verteilerrohr 15. Die Druckluftleitung 18 ist wiederum über ein Magnetventil 19 an eine (nicht dargestellte) Druckluftquelle angeschlossen. Wird der Schwadenapparat in einer Halle betrieben, in der ein Druckluftversorgungsnetz vorhanden ist, kann die Druckluft unmittelbar aus dem Druckluftversorgungsnetz über das Magnetventil 19 zur Druckluftleitung 18 geführt werden. Wenn die Druckluftleitung 18 nicht an ein Druckluftversorgungsnetz angeschlossen werden kann, kann der Backofen selbst mit einer Druckluftflasche oder mit einem Kompressor ausgerüstet werden, der die erforderliche Druckluft erzeugt.

Mit beiden Magnetventilen 16 und 19 können Wasserdruck und Luftdruck einstellbar sein. Der Wasserdruck sollte unter dem Luftdruck liegen. Die gewählten Druckwerte für die Druckluft liegen beispielsweise etwa bei 2 bar Gesamtdruck, wobei der Wasserdruck über das Magnetventil 16 zum Beispiel auf etwa 1,5 bar eingestellt wird. Wenn das Wasser nicht aus einem Versorgungsnetz sondern aus einem Tank zugeführt wird, kann der Wasserdruck auch nahe dem atmosphärischen Druck liegen.

Die Druckluftleitung 18 durchragt die Wandung des Verteilerrohrs 15, wobei die Öffnung in der Wandung gegenüber der Umgebung abgedichtet ist. Beispielsweise kann die Druckluftleitung 18 dicht in die Öffnung in der Wandung des Verteilerrohrs 15 eingelötet oder über eine andere Dichtmasse dicht in das Verteilerrohr 15 eingefügt sein.

Zwischen der Mündung der Druckluftleitung 18 in das Verteilerrohr 15 und dem Magnetventil 19, welches das Verteilerrohr 15 an das Wasserversorgungsnetz anschließt, ist ein Rückschlagventil 20 an dem Verteilerrohr 15 angeordnet. Das Rückschlagventil 20 vermeidet ein Rückströmen von Wasser aus dem Verteilerrohr 15 in das Wasserversorgungsnetz, wenn aufgrund der zugefügten Druckluft ein Überdruck in dem Verteilerrohr 15 entsteht.

Wie die Fig. 4 und 5 zeigen, haben die Schwadeneisen 13 ein im Wesentlichen W-förmiges Profil. Insbesondere in Fig. 5 ist zu erkennen, dass oberhalb jedes Schwadeneisens 13 eine Sprühdüse oder Sprühöffnung 21 angeordnet ist, welche durch Bohrung in dem Verteilerrohr 15 gebildet wird. Der Durchmesser der Bohrungen kann über die Länge des Verteilerrohres 15 je nach Größe des an der jeweiligen Bohrung vorherrschenden Drucks variieren. Üblicherweise liegt der Durchmesser der Bohrungen zwischen 2 und 8 mm.

Die Fig. 6 zeigt die Vorderansicht eines isolierten Verteilerrohrs 15, dem sowohl Wasser als auch Druckluft zugeführt wird. Durch den erhöhten Druck und die Luftbeimischung zum Wasser in dem Verteilerrohr 15 tritt das Wasser aus dem Verteilerrohr 15 als Spray mit feinsten Tröpfchen in Form eines Aerosols aus. Die feinsten Wassertröpfchen benetzen die Schwadeneisen 13 auf ihrer gesamten Oberfläche, wenn sie nicht schon in der erhitzten Backatmosphäre verdampfen. Es ist nur eine geringe Menge an Wärmeenergie erforderlich, um die Wassertröpfchen des Aerosols verdampfen zu lassen. Aus diesem Grund können die Schwadeneisen 13 erheblich kürzer als bei herkömmlichen Backöfen ausgebildet werden. Zudem ist eine geringere Wassermenge und eine geringere Heizenergie erforderlich, um den für ein optimales Dampfergebnis gewünschten Dampfschwaden zu erzeugen.

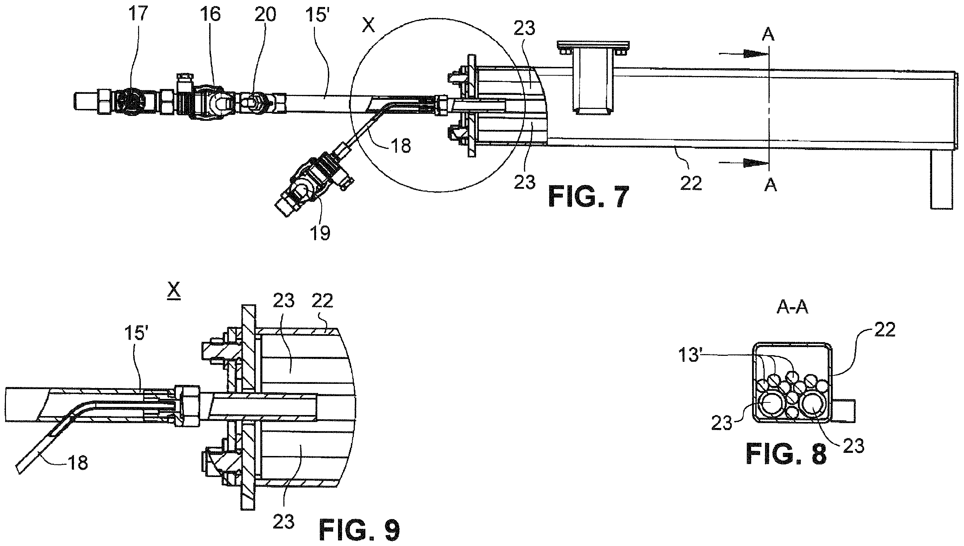

Die Fig. 7 bis 9 zeigen eine andere Ausführungsform eines Schwadenapparats. Der Dampfschwaden wird hier in einer separaten Dampfkammer erzeugt, welche von einem Gehäuse 22 aus Stahlblech gebildet wird. Die Wasserleitung 15' wird hier von einem offenen Sprührohr gebildet, welches einige Zentimeter in das Gehäuse 22 hineinragt. Wiederum ist eine Druckluftleitung 18 vorgesehen, welche in die Wasserleitung 15' mündet und Druckluft dem zugeführten Wasser beimischt. Die Druckluftleitung 18 ist auch bei dieser Ausführungsform über ein Magnetventil 19 verschließbar. Die Wasserleitung 15' ist wie bei der vorangehenden Ausführungsform über ein Rückschlagventil 20, ein Magnetventil 16 und einen Wasserzähler 17 mit dem Wasserversorgungsnetz verbunden.

Aufgrund der Druckluft wird durch das offene Ende des Sprührohrs 15' ein feiner Sprühnebel aus Wasser eingesprüht, der sich im Wesentlichen über die gesamte Länge des Gehäuses 22 erstreckt und in alle Bereich des Gehäuses 22 verteilt.

In dem Gehäuse 22 sind Stahlstangen 13' als Wärmeübertragungselement angeordnet. Ferner ist in dem Gehäuse 22 ein U-förmiges Heizrohr 23 angeordnet, von dem in den Zeichnungen jeweils Abschnitte der zwei Schenkel sichtbar sind. Das Heizrohr 23 wird von Thermoöl oder einem anderen aufheizbaren Fluid durchströmt und heizt die Stahlstangen 13' auf. Auch das Heizrohr 23 selbst dient als Wärmeübertragungselement zur Übertragung von Wärme auf in das Gehäuse 22 eingebrachte Wasser. Der in dem Gehäuse 22 entstehende Wasserdampf wird durch einen nicht dargestellten Dampfkanal in einen Backraum geleitet.

Wiederum erzeugt die zugeführte Druckluft einen feinen Sprühnebel beim Einbringen des Wassers, so dass in dem Gehäuse 22 bei einem Einsprühen des Wassers in kürzester Zeit ein Dampfschwaden erzeugt wird, der dem Backraum zugeleitet werden kann.

Für den Schwadenapparat aus Fig. 7 - 9 ist ein einfaches offenes Sprührohr 15' mit gerade am vorderen Ende austretendem Sprühnebel zufriedenstellend. Alternativ kann das Ende des Sprührohrs verschlossen und mit Bohrungen zur Bildung von Sprühdüsen versehen werden. Die Bohrungen können an der verschlossenen Stirnseite des Sprührohrs oder an dem Umfang des Sprührohrs angeordnet werden. Durch die Bohrungen kann die Größe und die Richtung der eingesprühten Sprühnebels variiert werden.

Die Druckluftleitung 18 kann auch zum Austreiben des Dampfschwadens aus dem Backraum verwendet werden. Hierfür wird das Magnetventil 16 gesperrt, welches in der Wasserleitung 15, 15', 15" angeordnet ist. Das Magnetventil 19 in der Druckluftleitung 18 wird dagegen geöffnet, so dass die Druckluft in den Backraum 4, 4' einströmt und die dort vorhandene Backatmosphäre durch einen Überdruckkanal aus dem Backraum austreibt. Eine separate Frischluftklappe zur Entschwadung des Backraums 4, 4' ist nicht erforderlich. Hierdurch wird der konstruktive Aufbau eines Backofens erheblich vereinfacht und die zeitgenaue Entfernung des Backschwadens aus dem Backraum gegenüber einem Backofen ohne Druckluftleitung 18 erheblich verbessert.

### Bezugszeichenliste

- 1: Gehäuse
- 2: Tür
- 3: Bedienfeld
- 4: Backraum
- 5: Gebläse
- 6,6': Deckwand
- 7: Heizregister
- 8: Brenner
- 9: Zufuhrkanal
- 10: Seitenwand
- 11: Schamottstein, Wärmespeicherelement
- 12, 12': Rückwand
- 13: Wärmeübertragungselement, Schwadeneisen
- 13': Wärmeübertragungselement, Stahlstange
- 14: Rauchgaskanal
- 15: Wasserleitung, Verteilerrohr
- 15': Wasserleitung, Sprührohr
- 16: Magnetventil
- 17: Wasserzähler
- 18: Druckluftleitung
- 19: Magnetventil
- 20: Rückschlagventil
- 21: Sprühdüse, Sprühöffnung
- 22: Gehäuse
- 23: Heizrohr

## Patentansprüche

1. Backofen mit einem Dampferzeuger, der einen Backschwaden in dem Backofen erzeugt, wobei der Dampferzeuger Folgendes aufweist:
• mindestens ein Wärme speicherndes Wärmeübertragungselement (13,13'),
• mindestens eine Wasserleitung (15,15'), welche Wasser zu dem Wärmeübertragungselement (13,13') führt,
• wobei die Wasserleitung (15, 15') mindestens eine Öffnung aufweist, aus der das Wasser ausströmt und auf die Oberfläche des Wärmeübertragungselements (13, 13') trifft,
**gekennzeichnet durch** mindestens eine Druckluftleitung (18), durch die dem Wasser Druckluft zugesetzt wird, wodurch der Druck des Wassers erhöht wird, so dass das Wasser in Form eines Sprühnebels aus der Öffnung austritt und in Form feinster Tröpfchen auf die Oberfläche des Wärmeübertragungselements trifft.

2. Backofen nach Anspruch 1, **dadurch gekennzeichnet, dass** die Druckluftleitung (18) in die Wasserleitung (15,15') mündet.

3. Backofen nach einem der vorangehenden Ansprüche, **dadurch gekennzeichnet, dass** die Wasserleitung (15) mehrere in Abständen zueinander angeordnete Sprühöffnungen (21) aufweist.

4. Backofen nach einem der vorangehenden Ansprüche, **dadurch gekennzeichnet, dass** die Wasserleitung (15,15') an ein Versorgungsnetz angeschlossen ist und dass in der Wasserleitung (15,15') zwischen der Mündung der Druckluftleitung (18) und dem Anschluss an das Versorgungsnetz ein Rückschlagventil (20) angeordnet ist.

5. Backofen nach einem der vorangehenden Ansprüche, **dadurch gekennzeichnet, dass** die Wasserleitung (15') im Wesentlichen waagerecht und oberhalb des Wärmeübertragungselements (13') angeordnet ist.

6. Backofen nach einem der vorangehenden Ansprüche, **dadurch gekennzeichnet, dass** die Wasserleitung (15) im Wesentlichen senkrecht und seitlich des Wärmeübertragungselements (13) verläuft.

7. Backofen nach einem der vorangehenden Ansprüche, **dadurch gekennzeichnet, dass** die Druckluftleitung (18) mit mindestens einer Druckluftquelle verbunden ist, die aus folgenden ausgewählt ist:
- eine Druckluftflasche;
- ein Druckluft-Versorgungsnetz;
- ein Kompressor.

8. Backofen nach einem der vorangehenden Ansprüche, **dadurch gekennzeichnet, dass** das Wärmeübertragungselement aus folgenden ausgewählt ist:
- aufheizbare Metallstangen (13');
- aufheizbare und beweglich miteinander verbundene Metallelemente, insbesondere Glieder einer Eisenkette;
- aufheizbare Schwadeneisen (13);
- eine Oberfläche und/oder ein Bauelement innerhalb eines Backraums (4) des Backofens.

9. Backofen nach einem der vorangehenden Ansprüche, **dadurch gekennzeichnet, dass** das Wärmeübertragungselement (13,13') in mindestens einem der folgenden Räume angeordnet ist:
- einem Backraum (4) des Backofens;
- einer an einen Backraum (4) des Backofens angrenzende Kammer;
- einer mit dem Backraum (4) des Backofens über mindestens einen Dampfkanal verbundene Dampferzeugungskammer.

10. Verfahren zum Erzeugen eines Backschwadens in einem Backofen, bei dem mindestens einem Wärme speichernden Wärmeübertragungselement (13,13') über mindestens eine Wasserleitung (15,15') Wasser zugeführt wird, wobei das Wasser aus mindestens einer Öffnung ausströmt und auf die Oberfläche des Wärmeübertragungselements (13, 13') trifft und der entstehende Wasserdampf in einen Backraum (4) des Backofens geleitet wird, **dadurch gekennzeichnet, dass** dem Wasser über eine Druckluftleitung (18) Druckluft zugesetzt und dadurch der Druck des Wassers erhöht wird, so dass das Wasser in Form eines Sprühnebels aus der Öffnung austritt und in Form feinster Tröpfchen auf die Oberfläche des Wärmeübertragungselements trifft.

11. Verwendung eines Backofens nach einem der Ansprüche 1 bis 9 zum Entfernen eines Backschwadens aus einem Backraum (4) des Backofens, **dadurch gekennzeichnet, dass** bei dem mit dem Backraum (4) verbundenen Dampferzeuger die Wasserzufuhr zur Wasserleitung (15,15') gesperrt und die Druckluftzufuhr zur Druckluftleitung (18) geöffnet wird, so dass die Druckluft in den Backraum (4) einströmt und die dort vorhandene Backatmosphäre durch einen Überdruckkanal aus dem Backraum austreibt.

## Claims

1. A baking oven having a steam generator which produces a baking vapour in the baking oven, the steam generator comprising:
• at least one heat transfer element (13, 13') storing heat,
• at least one water conduit (15, 15') which carries water to the heat transfer element (13, 13'),
• wherein the water conduit (15, 15') has at least one opening from which the water flows out onto the surface of the heat transfer element (13, 13'),
**characterized by** at least one compressed air line (18) through which compressed air is added to the water, thereby increasing the pressure of the water so that the water exits from the opening in the form of a spray mist and hits the surface of the heat transfer element in the form of very fine droplets.

2. The baking oven according to claim 1, **characterized in that** the compressed air line (18) opens into the water line (15, 15').

3. The baking oven according to one of the preceding claims, **characterized in that** the water conduit (15) has multiple spray openings (21) arranged at intervals from one another.

4. The baking oven according to one of the preceding claims, **characterized in that** the water conduit (15, 15') is connected to a supply network and that a non-return valve (20) is arranged in the water conduit (15, 15') between the mouth of the compressed air line (18) and the connection to the supply network.

5. The baking oven according to one of the preceding claims, **characterized in that** the water conduit (15') is arranged substantially horizontally and above the heat transfer element (13').

6. The baking oven according to one of the preceding claims, **characterized in that** the water conduit (15) is substantially vertical and lateral to the heat transfer element (13).

7. The baking oven according to one of the preceding claims, **characterized in that** the compressed air line (18) is connected to at least one compressed air source selected from:
- a compressed air bottle;
- a compressed air supply network;
- a compressor.

8. The baking oven according to one of the preceding claims, **characterized in that** the heat transfer element is selected from:
- heatable metal rods (13');
- heatable and movably interconnected metal elements, in particular links of an iron chain
- heatable vapour iron (13);
- a surface and/or a structural element within an baking chamber (4) of the baking oven.

9. The baking oven according to one of the preceding claims, **characterized in that** the heat transfer element (13, 13') is arranged in at least one of the following spaces:
- a baking chamber (4) of the baking oven;
- a chamber adjacent to a baking chamber (4) of the baking oven;
- a steam generation chamber connected to the baking chamber (4) of the baking oven via at least one steam channel.

10. Method for producing a baking vapour in a baking oven, in which water is supplied to at least one heat-storing heat transfer element (13, 13') via at least one water conduit (15, 15'), the water flowing out of at least one opening and being applied to the surface of the heat transfer element (13, 13'), 13') and the resulting vapour is supplied into a baking chamber (4) of the baking oven, **characterized in that** compressed air is added to the water via a compressed air line (18) and the pressure of the water is thereby increased so that the water exits from the opening in the form of a spray mist and hits the surface of the heat transfer element in the form of very fine droplets.

11. Use of a baking oven according to one of claims 1 to 9 for removing a baking vapour from a baking chamber (4) of a baking oven, **characterized in that** in the steam generator connected to the baking chamber (4) the water supply to the water conduit (15, 15') is blocked and the compressed air supply to the compressed air line (18) is opened so that the compressed air flows into the baking chamber (4) and expels the baking atmosphere present there from the baking chamber through an excess pressure channel.

## Revendications

1. Four de cuisson comportant un générateur de vapeur qui produit une vapeur de cuisson dans le four de cuisson, le générateur de vapeur comprenant
• au moins un élément de transfert de chaleur qui stocke de chaleur (13, 13'),
• au moins un conduit d'eau (15, 15') qui amène l'eau à l'élément de transfert de chaleur (13, 13'),
• le conduit d'eau (15, 15') comportant au moins une ouverture par laquelle l'eau s'écoule et rencontre la surface de l'élément de transfert de chaleur (13, 13'),
**caractérisé par** au moins une conduite d'air comprimé (18) par laquelle de l'air comprimé est ajouté à l'eau, ce qui augmente la pression de l'eau de sorte que l'eau sort de l'ouverture sous la forme d'un brouillard de pulvérisation et frappe la surface de l'élément de transfert de chaleur sous la forme de très fines gouttelettes.

2. Four de cuisson selon la revendication 1, **caractérisé en ce que** la conduite d'air comprimé (18) débouche dans la conduite d'eau (15, 15').

3. Four de cuisson selon l'une des revendications précédentes, **caractérisé en ce que** la conduite d'eau (15) présente plusieurs ouvertures de pulvérisation (21) disposées à intervalles les unes des autres.

4. Four de cuisson selon l'une des revendications précédentes, **caractérisé en ce que** la conduite d'eau (15, 15') est raccordée à un réseau d'alimentation et qu'un clapet anti-retour (20) est disposé dans la conduite d'eau (15, 15') entre l'embouchure de la conduite d'air comprimé (18) et le raccordement au réseau d'alimentation.

5. Four de cuisson selon l'une des revendications précédentes, **caractérisé en ce que** la conduite d'eau (15') est disposée sensiblement horizontalement et au-dessus de l'élément de transfert de chaleur (13').

6. Four de cuisson selon l'une des revendications précédentes, **caractérisé en ce que** le conduit d'eau (15) s'étend sensiblement vertical et latéral par rapport à l'élément de transfert de chaleur (13).

7. Four de cuisson selon l'une des revendications précédentes, **caractérisé en ce que** la conduite d'air comprimé (18) est reliée à au moins une source d'air comprimé choisie parmi les suivantes :
- une bouteille d'air comprimé ;
- un réseau d'alimentation en air comprimé ;
- un compresseur.

8. Four de cuisson selon l'une des revendications précédentes, **caractérisé en ce que** l'élément de transfert de chaleur est choisi parmi les suivants :
- les tiges métalliques chauffables (13') ;
- les éléments métalliques chauffables et interconnectés de manière mobile, en particulier les maillons d'une chaîne en fer
- les fers de vapeur chauffables (13) ;
- une surface et/ou un élément structurel à l'intérieur d'une chambre (4) du four de cuisson.

9. Four de cuisson selon l'une des revendications précédentes, **caractérisé en ce que** l'élément de transfert de chaleur (13, 13') est disposé dans au moins un des espaces suivants :
- une chambre de cuisson (4) du four de cuisson;
- une chambre adjacente à une chambre de cuisson (4) du four de cuisson;
- une chambre de production de vapeur reliée à la chambre de cuisson (4) du four de cuisson par au moins un canal de vapeur.

10. Procédé de production d'une vapeur de cuisson dans un four de cuisson, dans lequel de l'eau est amenée par l'intermédiaire d'au moins une conduite d'eau (15, 15') à au moins un élément de transfert de chaleur (13, 13') qui stocke de chaleur, l'eau s'écoulant par au moins une ouverture et étant appliquée sur la surface de l'élément de transfert de chaleur (13, 13'), 13') et la vapeur d'eau qui en résulte est conduite dans une chambre de cuisson (4) du four de cuisson, **caractérisé en ce que** de l'air comprimé est ajouté à l'eau par une conduite d'air comprimé (18) et la pression de l'eau est ainsi augmentée de sorte que l'eau sort de l'ouverture sous la forme d'un brouillard de pulvérisation et frappe la surface de l'élément de transfert de chaleur sous la forme de très fines gouttelettes.

11. Utilisation d'un four de cuisson selon l'une des revendications 1 à 9 pour évacuer une vapeur de cuisson d'une chambre de cuisson (4) du four de cuisson, **caractérisée en ce que** dans le générateur de vapeur raccordé à la chambre de cuisson (4), l'alimentation en eau de la conduite d'eau (15, 15') est bloquée et l'alimentation en air comprimé de la conduite d'air comprimé (18) est ouverte, de sorte que l'air comprimé pénètre dans la chambre de cuisson (4) et expulse de la chambre de cuisson l'atmosphère de cuisson qui s'y trouve par un canal de surpression.
